# EUROPÄISCHE PATENTSCHRIFT

(11) **EP 2 910 914 B1**
(45) Veröffentlichungstag und Bekanntmachung des Hinweises auf die Patenterteilung: **31.01.2018**
(21) Anmeldenummer: 14156187.8
(22) Anmeldetag: 21.02.2014
(51) Int. Cl.: G01G 23/02, G01G 23/10, G01G 7/04

(54) **Wägevorrichtung und Verfahren zum Betreiben der Wägevorrichtung**
Weighing device and method for operating the weighing device
Dispositif de pesée et procédé de fonctionnement du dispositif de pesée

(43) Veröffentlichungstag der Anmeldung: 26.08.2015
(73) Patentinhaber: Multipond Wägetechnik GmbH, 84478 Waldkraiburg (DE)
(72) Erfinder: Riefle-Weber, Klaus, 84478 Waldkraiburg (DE); Peters, Andreas, 84544 Aschau am Inn (DE); Zeck, Wolfram, 84453 Mühldorf (DE)
(74) Vertreter: Prüfer & Partner mbB Patentanwälte · Rechtsanwälte

(56) Entgegenhaltungen:
- GB-A- 229 831
- GB-A- 684 475
- US-A- 5 850 057
- US-A1- 2004 000 437

## Beschreibung

Die Erfindung betrifft eine Wägevorrichtung und ein Verfahren zum Betreiben der Wägevorrichtung, insbesondere eine Wägevorrichtung und ein Verfahren zum Wiegen von auf die Wägevorrichtung fallenden Objekten.

Wenn Objekte, beispielsweise als Schüttgut, aus einer bestimmten Fallhöhe auf eine Wägezelle bzw. in damit verbundene Behälter fallen, entsteht ein Aufprallimpuls.

Durch diesen Aufprallimpuls wird auf die Wägezelle eine Aufprallenergie übertragen. Diese Aufprallenergie kann, verglichen mit einer Auslenkung durch das statische Gewicht der Objekte, die Wägezelle um ein Vielfaches davon auslenken. Dadurch kann die Wägezelle beschädigt werden oder die Genauigkeit davon reduziert werden.

Des Weiteren muss die in die Wägezelle übertragene Aufprallenergie abgebaut werden. Dabei wird die Wägezelle entsprechend ihrer Eigenfrequenz in Schwingungen versetzt und die Aufprallenergie beispielsweise durch innere Reibung in Wärme umgesetzt. Da durch die Schwingungen aber kein konstantes Messsignal der Wägezelle, das das Gewicht der Objekte auf der Wägezelle oder in dem Behälter angibt, möglich ist, dauert das Erfassen des tatsächlichen Gewichts des Objekts erheblich länger als bei einem Objekt, das auf die Wägezelle oder in den Behälter gelegt wird.

Als Abhilfemaßnahme gegen die übermäßige Verformung und das Schwingen werden mechanische Bauteile, wie etwa Anschläge, oder Dämpfer auf pneumatischem Wirkprinzip, mit Öl oder als Elastomer oder Drahtkissen verwendet, was aber aufwändig ist und einen erhöhten Bauraum beansprucht. Weitere Möglichkeiten sind, die Signale durch Analogfilter oder Digitalfilter zusätzlich zu filtern, um hochfrequente Schwingungen zu eliminieren, was aber niederfrequente Schwingungen nicht herausfiltert, so dass die Zeit zum Erfassen des tatsächlichen Gewichts nicht reduziert wird.
Aus dem Stand der Technik ist das Dokument GB 229 831 A bekannt, in dem eine elektrische Bremsvorrichtung zur Verwendung in einem Wiegeapparat offenbart wird.
Des Weiteren ist das Dokument GB 684 475 A bekannt, in dem eine elektromagnetische Dämpfungsvorrichtung offenbart wird.

Weiterer Stand der Technik ist durch Dokument US 5 850 057 A gegeben.

Es ist die Aufgabe der Erfindung, die obigen Nachteile auszuräumen und eine einfache, kostengünstige Lösung mit geringer Bauhöhe, die auch nachrüstbar ist, sowohl für eine Reduzierung der Auslenkung der Wägezelle auf Grund des Aufprallimpulses als auch für eine Schwingungsdämpfung bereitzustellen.

Die Aufgabe wird durch eine Wägevorrichtung mit den Merkmalen des Anspruchs 1 und eine Kombinationswaage gemäß Anspruch 13 gelöst. Ein Verfahren zum Lösen der Aufgabe ist in Anspruch 7 angegeben. Weiterentwicklungen der Erfindung sind Gegenstand der abhängigen Ansprüche.

In der Wägevorrichtung mit den Merkmalen des Anspruchs 1 wird eine Steifigkeit einer Wägezelle erhöht, so dass die Wägezelle als Anschlag dienen kann. Darüber hinaus ist ein Elektromagnet so ansteuerbar, dass die Steifigkeit der Wägezelle durch eine Steuerungsvorrichtung so gesteuert eingestellt werden kann, dass Schwingungen der Wägezelle schnell und effektiv gedämpft werden können.

Die Erfindung wird nun anhand von Ausführungsbeispielen unter Bezugnahme auf die beigefügten Zeichnungen erläutert.

Insbesondere zeigen
- Fig.1: eine Baugruppe aus einer Wägezelle mit einem damit verbundenen Anker und einem separat befestigten Elektromagneten;
- Fig. 2: ein Diagramm mit einem Einschwingsignal;
- Fig. 3: ein Diagramm mit einem magnetischen Gegenimpuls;
- Fig. 4: ein Diagramm mit einem mit einem magnetischen Gegenimpuls überlagerten Einschwingsignal; und
- Fig. 5: ein Diagramm mit einem Verlauf einer Schwingungsdämpfung.

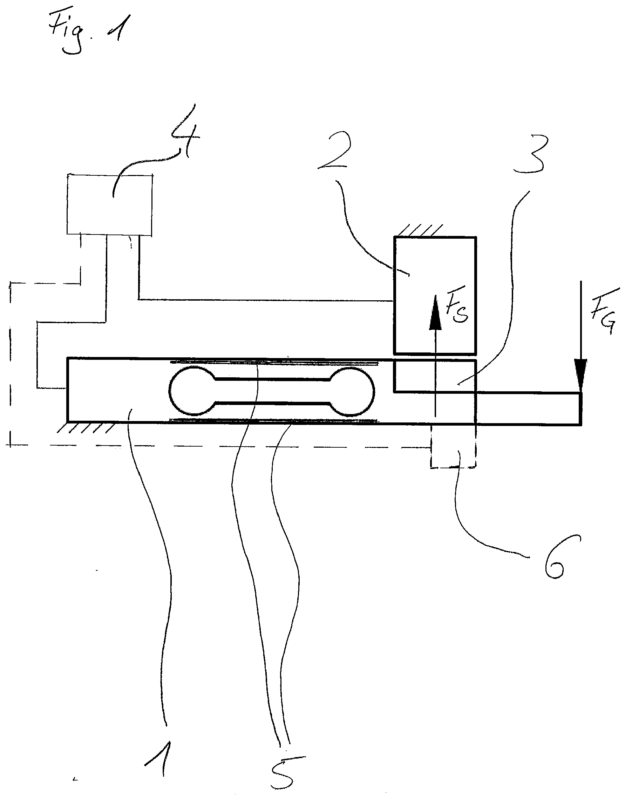

Fig. 1 zeigt eine Baugruppe, bestehend aus einer Wägezelle 1 und einem Elektromagneten 2, die in eine Kombinationswaage eingebaut ist. Die Wägezelle 1 und der Elektromagnet 2 sind separat an einem symbolisch gezeigten Gehäuse einer Wägevorrichtung befestigt. Zum Zusammenwirken mit dem Elektromagneten 2 weist die Baugruppe einen Anker 3 auf, der in die Wägezelle 1 integriert ist. Alternativ ist der Anker 3 nicht in die Wägezelle 1 integriert, sondern in einer anderen Weise, etwa darauf aufgesetzt, mit ihr verbunden.

Der Elektromagnet 2 ist optional mit einer Topfspule oder einer Tauchspule versehen.

Bei einer Belastung der Wägezelle 1 durch ein zu wiegendes Objekt wird auf die Wägezelle 1, optional über einen an der Wägezelle 1 befestigten Behälter zum Aufnehmen der zu wiegenden Objekte, eine Kraft F_{G} ausgeübt. Die Kraft F_{G} entspricht bei einer statischen Last der Gewichtskraft der zu wiegenden Objekte. Bei einer dynamischen Last, beispielsweise beim Aufprallen der zu wiegenden Objekte, die auf die Wägezelle 1 fallen, entspricht sie einem Aufprallimpuls.

Durch das Zusammenwirken des Elektromagneten 2 und des Ankers 3 wirkt, sobald der Elektromagnet 2 erregt ist, zwischen dem Elektromagneten 2 und dem Anker 3 eine Kraft F_{S}. Durch die Kraft Fs wirkt auf das in Fig. 1 rechts dargestellte Ende der Wägezelle 1 die Kraft Fs nach oben, also entgegengesetzt zu der in Fig. 1 nach unten gerichteten Gewichtskraft F_{G} und wirkt somit als Gegenkraft bzw. magnetischer Gegenimpuls.

Die Steifigkeit eines Körpers wird dabei als Widerstand gegen eine elastische Verformung, die auf Grund der Kraft F_{G} hervorgerufen wird, definiert. Beim Aufbringen der Kraft F_{G} auf die Wägezelle 1 verformt sich diese in Abhängigkeit von ihrer inhärenten Steifigkeit um ein bestimmtes Ausmaß. Wenn nun zusätzlich die Gegenkraft F_{S} entgegengesetzt zu der Kraft F_{G} aufgebracht wird, wird die Steifigkeit der Wägezelle 1 erhöht und die Wägezelle 1 nicht mehr so stark ausgelenkt. Eine Erhöhung der Steifigkeit der Wägezelle 1 verringert folglich die Auswirkung einer auf die Wägezelle 1 wirkenden Kraft F_{G}.

Optional ist der Elektromagnet 2 in einem vorbestimmten Abstand, beispielsweise von ca. 0,3 mm, angeordnet, so dass der Elektromagnet 2 bei einer übermäßigen Verformung der Wägezelle 1 für den Anker 3 als Anschlag dienen kann.

Die Wägezelle 1 ist hier mit Dehnmessstreifen 5 versehen, um über eine Verformung des elastischen Körpers der Wägezelle 1 eine Kraft F_{G} zu erfassen. Optional kann die Verformung auch mit anderen Mitteln, wie etwa optischen Mitteln oder induktiven Mitteln erfasst werden.

Ferner ist eine Steuerungsvorrichtung 4 in der Baugruppe vorgesehen und mit der Wägezelle 1 verbunden, um von der Wägezelle 1 ausgegebene Messsignale zu erfassen. Die Steuerungsvorrichtung 4 ist ebenfalls mit dem Elektromagneten 2 verbunden und steuert diesen an.

Die Steuerungsvorrichtung 4 ist dazu angepasst, das erfasste Messsignal der Wägezelle 1 auszuwerten. Das Messsignal der Wägezelle 1 gibt an, ob sich die Wägezelle 1 verformt, also ausgelenkt wird, und gibt somit in Verbindung mit der Steifigkeit der Wägezelle 1 eine auf die Wägezelle 1 wirkende Kraft an. Ohne die durch den Elektromagneten 2 erzeugte Kraft F_{G} gibt das Messsignal in einem stationären Zustand der Auslenkung der Wägezelle 1, also bei einem konstanten Messsignal, die Kraft F_{G} als die Gewichtskraft der zu wiegenden Objekte an. Sofern sich das Signal verändert, gibt das Messsignal an, dass ein Objekt einen Aufprallimpuls auf die Wägezelle 1 ausübt, oder dass die Auslenkung der Wägezelle 1 schwingt.

Nachfolgend wird ein Effekt einer Überlagerung des Aufprallimpulses und des magnetischen Gegenimpulses erläutert.

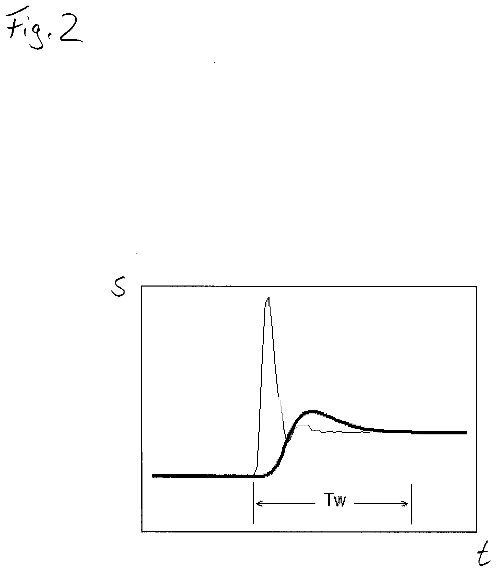

In Fig. 2 ist ein Diagramm mit einem Einschwingsignal gezeigt. Das Diagramm zeigt auf der horizontalen Achse eine Zeit t und auf einer vertikalen Achse die Messsignale, die der Auslenkung s der Wägezelle 1 entsprechen. Dabei zeigt eine dünne Linie ein Messsignal mit ungefilterten ADC-Werten der Wägezelle bei einem Aufprallimpuls, wobei bei den ungefilterten Werten ein schneller Anstieg mit einem hohen Überschwinger vorliegt. Eine dicke Linie zeigt ein gefiltertes Messsignal. Es ist ersichtlich, dass das gefilterte Messsignal verzögert ist und eine kleinere Auslenkung anzeigt. Die Dauer für ein Einpendeln auf einen statischen Endwert ist mit Tw angegeben. Die Messsignale ergeben sich für eine Wägezelle 1, die entweder nicht mit einem Anker 3 versehen ist, oder bei der der Elektromagnet 2 nicht aktiviert ist.

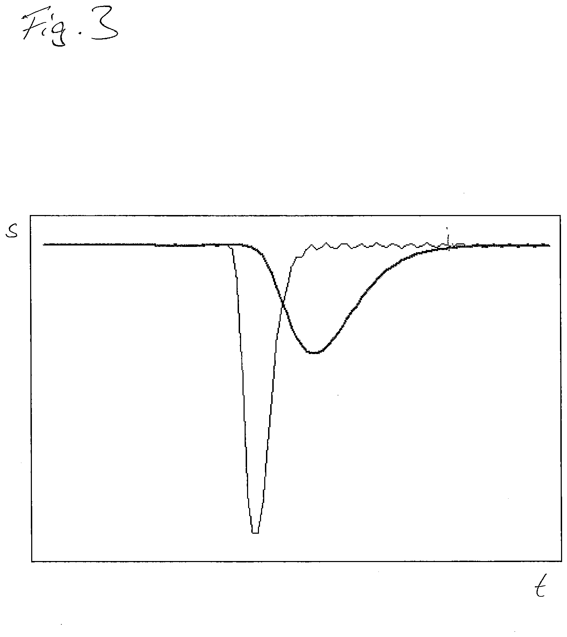

In Fig. 3 ist ein Diagramm mit einem magnetischen Gegenimpuls gezeigt, der, angesteuert durch die Steuerungsvorrichtung 4, durch den Elektromagneten 2 erzeugt wird. Das Diagramm zeigt auf der horizontalen Achse die Zeit t, und auf der vertikalen Achse die Messsignale, die dem Ausmaß der Auslenkung s der Wägezelle 1 auf Grund des Gegenimpulses des Magneten entsprechen. Hierbei zeigt eine dünne Linie einen ungefilterten Messwert der Auslenkung s, die durch den magnetischen Gegenimpuls hervorgerufen wird, und eine dicke Linie zeigt das gefilterte Messsignal der Auslenkung s auf Grund des magnetischen Gegenimpulses.

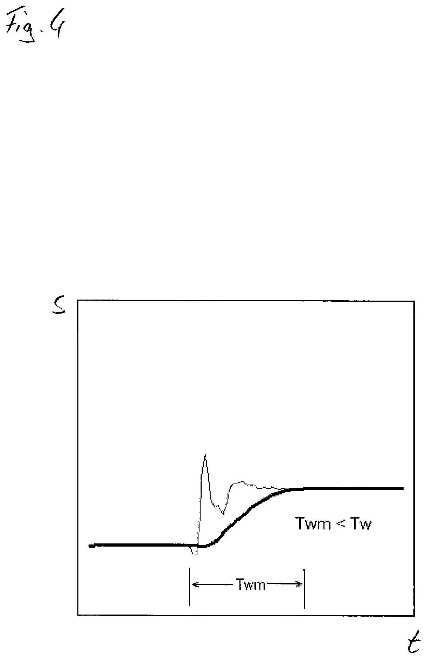

In Fig. 4 ist ein Diagramm mit dem mit dem magnetischen Gegenimpuls überlagerten Einschwingsignal gezeigt. Die dünne Linie zeigt einen Graphen des in Fig. 2 als dünne Linie dargestellten Messsignals mit ungefilterten ADC-Werten der Wägezelle 1 auf Grund des Aufprallimpulses, der von dem in Fig. 3 als dünne Linie dargestellten Messwert der Wägezelle 1 auf Grund des magnetischen Gegenimpulses überlagert ist. Die dünne Linie zeigt auch hier das ungefilterte Messsignal. Im Vergleich zu dem in Fig. 2 gezeigten Verlauf des ungefilterten Messsignals auf Grund des Aufprallimpulses ist zu erkennen, dass hier der Überschwinger wesentlich geringer ist und die Wägezelle 1 also wesentlich weniger ausgelenkt wird. Die dicke Linie, die das gefilterte Messsignal zeigt, weist im Gegensatz zu der in Fig. 2 keinen Überschwinger mehr auf und gibt früher einen statischen Endwert an, wobei eine Dauer Twm bis zum Einpendeln auf den statischen Endwert kleiner als die Dauer Tw in dem Fig. 2 gezeigten Fall ist.

Die in Fig. 1 gezeigte Steuerungsvorrichtung 4 ist in einer Ausführungsform dazu ausgebildet, neben der Erfassung des Messsignals der Wägezelle 1 und der Ansteuerung des Elektromagneten 2, auch einen Ablauf einer gesamten, nicht gezeigten, Waage zu steuern. Hierbei wird u.a. auch ein Auslösen eines Herabfallens von zu wiegenden Objekten, also ein Beginn des Herabfallens auf die Wägezelle 1 bzw. in den Behälter gesteuert und ein Auslösesignal für den Beginn des Herabfallens eines zu wiegenden Objekts wird erzeugt.

In einer alternativen Ausführungsform ist die Waage mit einer separaten Gesamtsteuerungsvorrichtung versehen, die dann mit der Steuerungsvorrichtung 4 verbunden ist, und die das Auslösesignal für den Beginn des Herabfallens eines zu wiegenden Objekts auch an die Steuerungsvorrichtung 4 liefert, wobei die Steuerungsvorrichtung 4 dann dieses Auslösesignal erfasst.

Die Steuerungsvorrichtung 4 ist in diesen beiden Ausführungsformen, in denen das Auslösesignal für den Beginn des Herabfallens des zu wiegenden Objekts erzeugt oder erfasst wird, ausgebildet, in Abhängigkeit von dem Auslösesignal für den Beginn des Herabfallens des zu wiegenden Objekts, den Elektromagneten 2 so anzusteuern, dass ein magnetischer Gegenimpuls mit der Kraft F_{S} auf die Wägezelle 1 erzeugt wird. Dadurch wird die Steifigkeit der Wägezelle 1 erhöht und die Wägezelle 1 quasi vorgespannt, bevor die zu wiegenden Objekte auf die Wägezelle 1 fallen. Somit kann die Auslenkung der Wägezelle 1 bei einem Auftreffen der zu wiegenden Objekte geringer ausfallen und eine Auslenkung über einen vorbestimmten Grenzwert, der im Voraus festgelegt wird, kann dadurch beispielsweise verhindert werden.

In einer weiteren alternativen Ausführungsform wird die Wägezelle 1 nicht vor dem Aufprall der zu wiegenden Objekte vorgespannt, sondern durch eine verzögerte Ansteuerung des Gegenimpulses wird eine übermäßige Auslenkung, mit der die Beschädigungsgefahr einhergeht, erst während des Aufprallimpulses verhindert oder reduziert, wobei das Schwingen der Wägezelle ebenfalls unmittelbar unterdrückt wird.

Der Aufprallimpuls auf die Wägezelle 1 wird durch die Wägezelle 1 erfasst und ein entsprechendes Signal an die Steuerungsvorrichtung 4 weitergegeben. Die Steuerungsvorrichtung 4 ist hier angepasst, in Abhängigkeit des sich auf Grund des von der Wägezelle 1 aufgenommenen Aufprallimpulses ergebenden Messsignals den Elektromagneten 2 anzusteuern.

Da der magnetische Gegenimpuls möglichst unmittelbar nach dem Aufprallen der zu wiegenden Objekte erzeugt werden soll, um eine große Auslenkung der Wägezelle 1 zu verhindern, eignet sich das in Fig. 2 gezeigte gefilterte Signal nicht als Basis für die Ansteuerung des Elektromagneten 2 für eine Erhöhung der Steifigkeit der Wägezelle 1. Aus diesem Grund wird in diesem Fall zur Ansteuerung des Elektromagneten 2 das ungefilterte Signal verwendet, um den magnetischen Gegenimpuls unmittelbar zu starten.

Optional weist die Wägevorrichtung einen separaten Sensor 6 auf, der die Auslenkung, also auch einen Beginn der Auslenkung, der Wägezelle 1 erfasst. Der Sensor 6 ist als ein Beschleunigungssensor oder ein Positionssensor ausgebildet. Alternativ kann auch der Elektromagnet 2 mit einer Induktivitätsmesseinrichtung als Positionssensor dienen. Bei einer Auslenkung der Wägezelle 1 vergrößert sich ein Restluftspalt des Elektromagneten 2, was dann eine Verringerung der gemessenen Induktivität zur Folge hat. Dadurch kann die Position des Ankers 3 und somit die Auslenkung der Wägezelle 1 erfasst werden.

Der Sensor 6 ist ebenfalls mit der Steuerungsvorrichtung 4 verbunden. Ein Signal des Sensors 6 wird durch die Steuerungsvorrichtung 4 ausgewertet, wodurch sowohl der Beginn der Auslenkung der Wägezelle 1 als auch der Verlauf der Auslenkung bestimmt werden kann.

Ein zur Ansteuerung des Elektromagneten 2 erzeugtes Ausgangssignal der Steuerungsvorrichtung 4 ist von den Parametern "Zeitpunkt des Kraftimpulses" (Startzeitpunkt) und "Dauer des Kraftimpulses" (Betätigungszeit) abhängig. Der "Zeitpunkt des Kraftimpulses" richtet sich nach dem Zeitpunkt des Beginns des freien Falls von den Objekten, der Fallhöhe und der örtlichen Erdbeschleunigung. Die "Dauer des Kraftimpulses" (Betätigungszeit) richtet sich nach der Höhe des Aufprallimpulses, welche wiederum von der Masse, der Fallhöhe, der örtlichen Erdbeschleunigung und von Produkteigenschaften abhängig ist.

Die Steuerungsvorrichtung 4 ist in sämtlichen Ausführungsformen mit Mitteln zum Berechnen und/oder Festlegen der verschiedenen jeweils erforderlichen Parameter versehen.

Die Steuerungsvorrichtung 4 ist ferner optional ausgebildet, Schwingungen der Wägezelle 1 zu verringern. Die Schwingungen können eine nicht oder nicht vollständig gedämpfte Schwingung auf Grund des Aufprallimpulses sein, oder durch externe Störquellen eingeprägt werden. Diese Störquellen können beispielsweise mechanische Schwankungen des Untergrunds durch Motoren, Fördersysteme, o.ä., oder elektrische Einflüsse durch Netzfrequenzen oder frequenzgeregelte Antriebe sein. Dabei entstehende niederfrequente Schwingungen können jedoch durch Tiefpassfilter von Messanordnungen nicht zuverlässig unterdrückt werden. Bei einer entsprechend hohen Datenrate kann die Steuerungsvorrichtung 4 Extremwerte dieser Schwingungen genau ermitteln und unter Berücksichtigung der Phasenverschiebung über den Elektromagneten 2 magnetische Gegenimpulse ausgeben, die die Auslenkung der Wägezelle 1 reduzieren. Die Parameter (Startzeitpunkt, Betätigungszeit) werden dabei, in Abhängigkeit vom derzeitigen Zustand der Wägezelle 1, jeweils neu berechnet.

Im Betrieb sind verschiedene Verfahren möglich, um sowohl eine Reduzierung der Auslenkung der Wägezelle 1 auf Grund des Aufprallimpulses als auch eine Schwingungsdämpfung zu realisieren.

In den Verfahren, in denen die Wägezelle 1 vor dem Aufprallimpuls oder während des Aufprallimpulses des zu wiegenden Objekts vorgespannt wird, wird von der Steuerungsvorrichtung 4, oder optional von der Gesamtsteuerungsvorrichtung, zunächst das Auslösesignal für den Beginn des Herabfallens des zu wiegenden Körpers ausgegeben, oder optional erfasst. Die Steuerungsvorrichtung 4 kennt also den Zeitpunkt des Beginns des freien Falls selbst oder erfasst ihn optional von der Gesamtsteuerungsvorrichtung. Zu einem vorbestimmten Zeitpunkt (Startzeitpunkt) wird für eine vorbestimmte Zeitdauer (Betätigungszeit) von der Steuerungsvorrichtung ein impulsförmiges Ausgangssignal an den Elektromagneten 2 gegeben, um die Steifigkeit der Wägezelle 1 zu erhöhen.

Der Startzeitpunkt wird in Abhängigkeit von der Fallhöhe und der örtlichen Erdbeschleunigung festgelegt. Der Elektromagnet 2 wird zum Startzeitpunkt durch die Steuerungsvorrichtung 4 so angesteuert, dass der magnetische Gegenimpuls die Wägezelle 1 vorspannt, wodurch sie eine höhere Steifigkeit als ohne magnetischen Gegenimpuls aufweist, bevor oder während das zu wiegende Objekt den Aufprallimpuls auf die Wägezelle 1 ausübt. Die Dauer des magnetischen Gegenimpulses wird in Abhängigkeit von der Höhe des Aufprallimpulses festgelegt, der sich aus der Masse, der Fallhöhe und von Produkteigenschaften des zu wiegenden Objekts und der örtlichen Erdbeschleunigung ergibt.

In diesen Verfahren wird die Wägezelle bei dem Aufprallimpuls der zu messenden Objekte auf die Wägezelle 1 oder den damit verbundenen Behälter, wie in Fig. 4 im Vergleich zu Fig. 2 gezeigt, auf Grund des Gegenimpulses nicht so stark ausgelenkt. In dem Messsignal entsteht kein Überschwinger und die Zeitdauer, bis ein konstantes Messsignal vorliegt ist kürzer.

In einem alternativen Verfahren, in dem nicht der Zeitpunkt des Beginns des freien Falls des zu wiegenden Objekts berücksichtigt wird, um die Auslenkung der Wägezelle auf Grund des Aufprallimpulses zu reduzieren, wird vor der Ausgabe des impulsförmigen Ausgangssignals durch die Steuerungsvorrichtung 4 das Messsignal der Wägezelle 1 auf Grund des Aufprallimpulses erfasst. Aus einer Analyse des Messsignals wird durch die Steuerungsvorrichtung 4 die Höhe des Aufprallimpulses ermittelt, der Parameter der Dauer des Kraftimpulses festgelegt und unverzüglich ein entsprechendes Ausgangssignal als einzelnes Impulssignal für den Gegenimpuls an den Elektromagneten 2 ausgegeben.

In Folge des Aufprallimpulses der zu messenden Objekte auf die Wägezelle 1 oder den damit verbundenen Behälter wird auch in diesem Verfahren die Wägezelle nicht so stark ausgelenkt, und auch Überschwinger in dem Messsignal und die Zeitdauer, bis ein konstantes Messsignal vorliegt, werden reduziert.

In einem weiteren alternativen Verfahren wird nicht das Messsignal der Wägezelle 1, sondern das Signal des Sensors 6, der die Auslenkung der Wägezelle 1 erfasst, erfasst. Das Verfahren entspricht ansonsten dem vorgenannten.

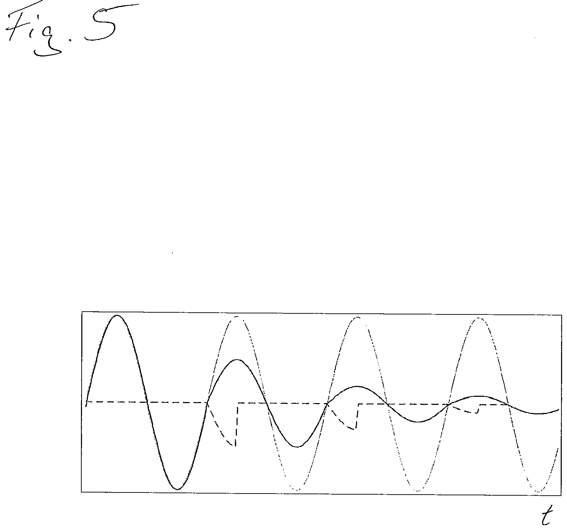

Darüber hinaus werden in einem Verfahren, um die Zeitdauer zu reduzieren bis ein konstantes Messsignal vorliegt, auch nach einem Abklingen des Aufprallimpulses eines zu wiegenden Objekts während eines Schwingens der Wägezelle 1 periodische Impulse erfasst. Wie in Fig. 5 gezeigt, wird immer bei einem Nulldurchgang der mit einer dicken Linie gezeigten Schwingung, also von periodischen Impulsen, jeweils in der gleichen Phase durch den Elektromagneten 2 ein mit einer Strich-Punkt-Linie gezeigter periodischer gegenphasiger Impuls auf die Wägezelle 1 gegeben. Durch jeden dieser Gegenimpulse wird dann die Amplitude der Schwingung verringert, so dass, im Vergleich zu der mit der dünnen Linie gezeigten ungedämpften Schwingung, die Zeitdauer, bis ein konstantes Messsignal vorliegt, reduziert wird.

Die Parameter der periodischen Impulse werden entweder vorab bestimmt, oder optional bei jedem aufgenommenen Impuls berechnet.

Die Parameter eines Parametersatzes werden optional innerhalb eines vorbestimmten Wahrscheinlichkeitsbereichs, nämlich eines vorbestimmten Wertebereichs, variiert und ein entsprechendes Ausgangssignal wird an den Elektromagneten 2 gegeben. Die Auswirkung der einzelnen Parametersätze auf das aktuelle Messsignal wird erfasst und das Ausgangssignal mit den Parametern des Parametersatzes mit der Auswirkung, dass die Schwingung verstärkt gedämpft wird, so dass möglichst rasch ein konstantes Messsignal ausgegeben wird, wird an den Elektromagneten 4 ausgegeben. Somit werden für bestimmte Kriterien optimale Parameter ermittelt, um eine lernfähige Anpassung an veränderte Verhältnisse zu erzielen, wodurch die Wägevorrichtung selbstlernend ist, um das Schwingen der Wägezelle 1 optimal zu dämpfen.

Um den Betrieb des Elektromagneten 2 bei den entsprechenden Ausgangssignalen dauerhaft sicherzustellen, wird eine Remanenz des Elektromagneten durch gezieltes Umpolen gelöscht.

Die verschiedenen Ausführungsformen sind kombinierbar.

## Patentansprüche

1. Wägevorrichtung aus einer Wägezelle (1) und einem Elektromagneten (2) mit einem Anker (3), wobei der Anker (3) an der Wägezelle (1) befestigt ist, der Elektromagnet (2) separat befestigt ist, und der Elektromagnet (2) und der Anker (3) so angeordnet sind, dass bei einer Ansteuerung des Elektromagneten (2) eine magnetische Kraft auf den Anker (3) und dadurch auf die Wägezelle (1) ausgeübt wird, die einer Auslenkung während eines Wiegevorgangs entgegengesetzt ist und welche eine von einem Aufprallimpuls eines zu wiegenden Objekts stammende Auslenkung reduziert, **dadurch gekennzeichnet, dass** die Wägezelle (1) eine Steuerungsvorrichtung (4) aufweist, die so ausgebildet ist, dass in Abhängigkeit von einem Auslösesignal für den Beginn des Herabfallens des zu wiegenden Objekts der Elektromagnet (2) so angesteuert wird dass ein magnetischer Gegenimpuls mit einer Kraft (F_{S}) auf die Wägezelle (1) erzeugt wird.

2. Wägevorrichtung gemäß Anspruch 1, wobei der Elektromagnet (2) in einem solchen Abstand von dem Anker (3) angeordnet ist, dass der Elektromagnet (2) als Anschlag für den Anker (3) vorgesehen ist.

3. Wägevorrichtung gemäß einem der Ansprüche 1 oder 2, wobei
die Wägevorrichtung einen Sensor (6) zum Erfassen einer Auslenkung der Wägezelle (1) aufweist.

4. Wägevorrichtung gemäß Anspruch 3, wobei
die Steuerungsvorrichtung (4) ausgebildet ist, in Abhängigkeit von der von dem Sensor (6) erfassten Auslenkung der Wägezelle (1) den Elektromagneten (2) anzusteuern.

5. Wägevorrichtung gemäß einem der Ansprüche 1 bis 4, wobei
die Steuerungsvorrichtung (4) ausgebildet ist, in Abhängigkeit von einem von der Wägezelle (1) aufgenommenen Messsignal den Elektromagneten (2) anzusteuern.

6. Wägevorrichtung gemäß einem der Ansprüche 1 bis 5, wobei die Steuerungsvorrichtung (4) Mittel zum Festlegen von Parametern, zumindest einer Betätigungszeit des Elektromagneten (2) und/oder eines Startzeitpunktes der Ansteuerung des Elektromagneten (2) aufweist.

7. Verfahren zum Betreiben einer Wägevorrichtung gemäß einem der Ansprüche 1 bis 6, aufweisend den Schritt:
Ausgeben eines impulsförmigen Ausgangssignals an den Elektromagneten (2) zu einem vorbestimmten Zeitpunkt und von einer vorbestimmten Zeitdauer.

8. Verfahren gemäß Anspruch 7 mit der Wägevorrichtung gemäß Anspruch 1, mit einem zusätzlichen vorhergehenden Schritt:
Erfassen des Signals des Beginns des Herabfallens des zu wiegenden Objekts durch die Steuerungsvorrichtung (4), um das impulsförmige Ausgangssignal vor einem Aufprallimpuls oder während eines Aufprallimpulses des zu wiegenden Objekts auf die Wägezelle (1) auszugeben.

9. Verfahren gemäß Anspruch 7 mit der Wägevorrichtung gemäß Anspruch 5, mit einem zusätzlichen Schritt:
Erfassen des Messsignals der Wägezelle (1) durch die Steuerungsvorrichtung (4) und Ausgeben des impulsförmigen Ausgangssignals basierend auf dem erfassten Messsignal.

10. Verfahren gemäß Anspruch 9, wobei
die Steuerungsvorrichtung (4) auch nach Abklingen eines Aufprallimpulses eines zu wiegenden Objekts bei Schwankungen des Messsignals diese durch gegenphasige magnetische Impulse reduziert.

11. Verfahren gemäß einem der Ansprüche 7 bis 10 mit eine Wägevorrichtung gemäß Anspruch 6, wobei die Parameter eines Parametersatzes innerhalb eines vorbestimmten Wertebereichs variiert werden, die Auswirkungen auf das Messsignal erfasst werden und die für bestimmte Kriterien optimalen Parameter ermittelt werden, um eine lernfähige Anpassung an veränderte Verhältnisse zu erzielen.

12. Verfahren gemäß einem der Ansprüche 7 bis 11, wobei die Remanenz des Elektromagneten durch gezieltes Umpolen gelöscht wird.

13. Kombinationswaage mit einer Wägevorrichtung gemäß einem der Ansprüche 1 bis 6.

## Claims

1. Weighing device formed by a weighing cell (1) and an electromagnet (2) with an anchor (3), wherein the anchor (3) is fixed to the weighing cell (1), the electromagnet (2) is separately fixed, and the electromagnet (2) and the anchor (3) are arranged in a way that during an actuation of the electromagnet (2), a magnetic force is exerted on the anchor (3) and hence also on the weighing cell (1), the magnetic force being opposed to a deflection during the weighing process and reducing a deflection resulting from an impact pulse of an object to be weighed,
**characterized in that** the weighing cell (1) comprises a control device (4), which is formed in a way that dependent on a trigger signal for the beginning of the dropping of the object to be weighed, the electromagnet (2) is actuated in a way that a magnetic counter pulse with a force (F_{S}) on the weighing cell (1) is generated.

2. Weighing device according to claim 1, wherein the electromagnet (2) is arranged in such a distance from the anchor (3) that the electromagnet (2) is provided as a stop for the anchor (3).

3. Weighing device according to one of claims 1 or 2, wherein the weighing device comprises a sensor (6) for capturing of a deflection of the weighing cell (1).

4. Weighing device according to claim 3, wherein the control device (4) is formed in order to actuate the electromagnet (2) dependent on the deflection of the weighing cell (1) which is captured by the sensor (6).

5. Weighing device according to one of claims 1 to 4, wherein the control device (4) is formed in order to actuate the electromagnet (2) dependent on a measuring signal recorded by the weighing cell (1).

6. Weighing device according to one of claims 1 to 5, wherein the control device (4) comprises means for setting of parameters, at least of an activation time of the electromagnet (2) and/or a start point of the actuation of the electromagnet (2).

7. Process for operating a weighing device according to one of claims 1 to 6, comprising the following step:
Outputting of an pulse-shaped output signal to the electromagnet (2) at a predetermined point of time and of a predetermined period.

8. Process according to claim 7 with the weighing device according to claim 1, with an additional preceding step:
Capturing of the signal at the beginning of the dropping of the object to be weighed by the control device (4), in order to output the pulse-shaped output signal before an impact pulse or during an impact pulse of the object to be weighed on the weighing cell (1).

9. Process according to claim 7 with the weighing device according to claim 5, with an additional step:
Capturing of the measuring signal of the weighing cell (1) by the control device (4) and outputting of the pulse-shaped output signal based on the captured measuring signal.

10. Process according to claim 9, wherein
the control device (4), also after abating of an impact pulse of an object to be weighed during fluctuations of the measuring signal, reduces those by inverse magnetic pulses.

11. Process according to one of claims 7 to 10 with a weighing device according to claim 6, wherein the parameters of a set of parameters within a predetermined range of values are varied, the impacts on the measuring signals are captured and the optimal parameters for certain criteria are determined, in order to obtain an adaptive adjustment to amended circumstances.

12. Process according to one of claims 7 to 11, wherein the remanence of the electromagnet is deleted via targeted reversion of the polarities.

13. Combination scale with a weighing device according to one of claims 1 to 6.

## Revendications

1. Dispositif de pesée composé d'une cellule de pesée (1) et d'un électroaimant (2) avec un induit (3), dans lequel l'induit (3) est fixé à la cellule de pesée (1), l'électroaimant (2) est fixé séparément, et l'électroaimant (2) et l'induit (3) sont disposés de sorte que, en cas d'une excitation de l'électroaimant (2), est exercée sur l'induit (3) et, de ce fait, sur la cellule de pesée (1) une force magnétique qui est opposée à une déviation durant une opération de pesée et qui réduit une déviation provenant d'une impulsion d'impact d'un objet à peser,
**caractérisé en ce que** la cellule de pesée (1) comprend un dispositif de commande (4) qui est conçu de sorte que, en fonction d'un signal de déclenchement pour le début de la chute de l'objet à peser, l'électroaimant (2) est excité de manière qu'une contre-impulsion magnétique est générée avec une force (F_{S}) sur la cellule de pesée (1).

2. Dispositif de pesée selon la revendication 1, dans lequel
l'électroaimant (2) est disposé à une telle distance de l'induit (3) que l'électroaimant (2) est prévu en tant que butée pour l'induit (3).

3. Dispositif de pesée selon l'une quelconque des revendications 1 ou 2, dans lequel
le dispositif de pesée comprend un capteur (6) pour la détection d'une déviation de la cellule de pesée (1).

4. Dispositif de pesée selon la revendication 3, dans lequel
le dispositif de commande (4) est conçu pour exciter l'électroaimant (2) en fonction de la déviation de la cellule de pesée (1) détectée par le capteur (6).

5. Dispositif de pesée selon l'une quelconque des revendications 1 à 4, dans lequel
le dispositif de commande (4) est conçu pour exciter l'électroaimant (2) en fonction d'un signal de mesure reçu par la cellule de pesée (1).

6. Dispositif de pesée selon l'une quelconque des revendications 1 à 5, dans lequel le dispositif de commande (4) comprend des moyens pour spécifier des paramètres, d'au moins un temps d'actionnement de l'électroaimant (2) et/ou d'un instant de démarrage de l'excitation de l'électroaimant (2).

7. Procédé de fonctionnement d'un dispositif de pesée selon l'une quelconque des revendications 1 à 6, comprenant l'étape :
la fourniture d'un signal de sortie de forme impulsionnelle à l'électroaimant (2) à un instant prédéterminé et d'une durée prédéterminée.

8. Procédé selon la revendication 7 avec le dispositif de pesée selon la revendication 1, avec une étape précédente supplémentaire :
la détection d'un signal du début de la chute de l'objet à peser par le dispositif de commande (4) pour fournir le signal de sortie de forme impulsionnelle avant une impulsion d'impact ou pendant une impulsion d'impact de l'objet à peser sur la cellule de pesée (1).

9. Procédé selon la revendication 7 avec le dispositif de pesée selon la revendication 5, avec une étape supplémentaire :
la détection du signal de mesure de la cellule de pesée (1) par le dispositif de commande (4) et la fourniture du signal de sortie de forme impulsionnelle sur la base du signal de mesure détecté.

10. Procédé selon la revendication 9, dans lequel
le dispositif de commande (4), également après la disparition de l'impulsion d'impact d'un objet à peser, en cas d'oscillations du signal de mesure, réduit celles-ci par des impulsions magnétiques de phase opposée.

11. Procédé selon l'une quelconque des revendications 7 à 10 avec un dispositif de pesée selon la revendication 6, dans lequel les paramètres d'un jeu de paramètres sont variés à l'intérieur d'une plage de valeurs prédéterminée, les effets sur le signal de mesure sont détectés et les paramètres optimaux pour des critères déterminés sont établis pour obtenir une adaptation capable d'évoluée selon les rapports modifiés.

12. Procédé selon l'une quelconque des revendications 7 à 11, dans lequel la rémanence de l'électroaimant est supprimée par une inversion de polarité appropriée.

13. Balance à têtes multiples avec un dispositif de pesée selon l'une quelconque des revendications précédentes 1 à 6.
